# FASCICULE DE BREVET EUROPEEN

(11) **EP 3 948 636 B1**
(45) Date de publication et mention de la délivrance du brevet: **23.07.2025**
(21) Numéro de dépôt: 20720356.3
(22) Date de dépôt: 31.03.2020
(51) Int. Cl.: G06F 30/20, G06F 111/20

(54) **PROCÉDÉ DE RÉALISATION D'UNE ARMOIRE ÉLECTRIQUE INDUSTRIELLE**
VERFAHREN ZUR HERSTELLUNG EINES INDUSTRIELLEN ELEKTRISCHEN SCHRANKES
METHOD FOR PRODUCING AN INDUSTRIAL ELECTRICAL CABINET

(30) Priorité: 01.04.2019 FR 1903433
(43) Date de publication de la demande: 09.02.2022
(73) Titulaire: Satie SAS, 68700 Cernay (FR)
(72) Inventeur: FACCIN, Gino, 68440 ZIMMERSHEIM (FR); JACQUEMIN, Steve, 68170 RIXHEIM (FR); BECKER, Stéphane, 67000 STRASBOURG (FR); KUPPE, Martin, 67000 STRASBOURG (FR); STENGER, Jean-Michel, 67000 STRASBOURG (FR)
(74) Mandataire: Ipsilon Lyon
(86) Numéro de dépôt international: PCT/EP2020/059061
(87) Numéro de publication internationale: WO 2020/201256

(56) Documents cités:
- US-A1- 2011 307 100
- EDGAR C. TAMAYO ET AL: "Design automation of control panels for automated modular construction machines", PROCEDIA CIRP, vol. 70, 31 May 2018 (2018-05-31), NL, pages 404 - 409, XP055624619, ISSN: 2212-8271, DOI: 10.1016/j.procir.2018.02.004
- EPLAN HELLAS: "EPLAN ProPanel 3D Panel Layout Tutorial", YOUTUBE, 8 January 2015 (2015-01-08), pages 1 pp., XP054980197, Retrieved from the Internet <URL:https://www.youtube.com/watch?v=VOh03uONAKw&t=244s> [retrieved on 20200206]
- ANONYMOUS: "Control Engineering | Four aspects of good control panel design", 2 January 2017 (2017-01-02), XP055665571, Retrieved from the Internet <URL:https://www.controleng.com/articles/four-aspects-of-good-control-panel-design/> [retrieved on 20200205]

## Description

### Domaine technique

L'invention concerne un procédé permettant de guider un utilisateur dans la réalisation d'une armoire électrique industrielle et d'automatiser les étapes de conception de ladite armoire.

Plus particulièrement, l'invention concerne une invention mise en œuvre par ordinateur dans laquelle une interface graphique permet de guider l'utilisateur dans la définition d'une implantation de composants électriques préalablement définis, et dans laquelle un outil logiciel permet de concevoir automatiquement une armoire électrique industrielle en fonction de ladite implantation.

L'invention trouve une application particulièrement avantageuse pour définir et réaliser une armoire électrique industrielle dans laquelle des composants électriques et des structures de support présentent des géométries variables et des contraintes d'implantation multiples.

### Technique antérieure

Contrairement aux applications domestiques pour lesquelles les armoires électriques sont standardisées, les armoires électriques industrielles doivent permettre l'intégration de composants électriques particuliers avec des dimensions propres et des structures de support spécifiques.

Dans les armoires électriques industrielles, les structures de support correspondent souvent à deux rails parallèles permettant un vissage ou un clipsage des composants électriques avec un écartement variable en fonction du composant électrique.

Par exemple, certaines entreprises développent et utilisent des composants électriques propriétaires pour des applications spécifiques d'alimentation, de sécurisation de commande et/ou d'interface de machines industrielles. Ainsi, pour les armoires électriques industrielles, il convient de faire cohabiter dans un même châssis des composants électriques de tailles variables avec des fonctions diverses et des structures de support différentes.

Un grand nombre de logiciels visent à faciliter la création d'une armoire électrique domestique. Il s'agit par exemple des logiciels développés par Legrand^{®}, Schneider-Electric^{®} ou Hager^{®}, dont le principe est repris dans la publication US 2011/307100 A1.

Le fonctionnement de ces logiciels est similaire. L'utilisateur commence par sélectionner le matériel qu'il souhaite intégrer dans son armoire électrique domestique.

Sur la base des composants électriques sélectionnés, le logiciel extrait d'une base de données une représentation de chaque composant électrique ainsi qu'un ensemble d'informations techniques, telles que la nature et l'encombrement de chaque composant électrique.

En fonction de l'encombrement de l'ensemble des composants électriques sélectionnés, le logiciel peut choisir, dans une bibliothèque de boitiers prédéfinis, une taille de boîtier utilisable et proposer, ensuite, une implantation des composants électriques en juxtaposant les composants de même nature jusqu'à remplir une ou plusieurs lignes de montage prédéfinies avec le boîtier sélectionné.

Ce calcul est assez simple car les composants électriques ont des dimensions similaires et, surtout, les mêmes structures de support peuvent être utilisées pour supporter les différents composants électriques. De plus, ces logiciels utilisent un entraxe prédéfini et constant entre les lignes.

Dans le cas de l'implantation d'une armoire électrique industrielle, il n'existe pas de logiciel permettant de réaliser une implantation automatisée en raison de la grande variabilité des composants électriques et de leurs moyens de fixation, ni de créer en temps réel et sur mesure une armoire électrique à partir de cette implantation.

Le logiciel « EPLAN Pro Panel 3D » propose, par exemple, à l'utilisateur de positionner manuellement chaque élément d'une armoire électrique industrielle. Pour ce faire, l'utilisateur travaille comme sur une table de dessin industriel, et il commence par dessiner son support en fonction de son estimation de l'encombrement final des composants électriques prédéfinis (voir par exemple les publications suivantes : « EPLAN ProPanel 3D Panel Layout Tutorial ». Youtube, 8 janvier 2015, page 1 pp., Extrait de l'Internet ; Edgar C. Tamayo et al. « Design automation of control panels for automated modular construction machines », Procedia Cirp, vol. 70, 31 mai 2018, pages 404-409).

Pour implanter les composants électriques, l'utilisateur cherche à regrouper les composants électriques de même nature, c'est-à-dire les composants configurés pour réaliser une alimentation, une sécurisation, une commande et/ou une interface de connexion d'un ou de plusieurs périphériques, selon des règles de bonne pratique comme celles édictées par exemple dans la publication suivante : Anonymous « Control Engineering : Four aspects of good control panel design », 2 janvier 2017, Extrait de l'Internet.

Dans ces regroupements, l'utilisateur regroupe ensuite les composants électriques qui présentent les mêmes moyens de fixation et des dimensions similaires pour les juxtaposer sur une même rangée. Les autres composants électriques sont ensuite agencés en fonction de l'espace restant et des préférences de l'utilisateur.

L'utilisateur peut ainsi obtenir une implantation des composants électriques sélectionnés. Cependant, cette implantation n'est pas forcément optimisée et il est souvent possible de réaliser une autre implantation qui permettrait, à force de recherches laborieuses de dispositions spécifiques, de réduire les dimensions du châssis. En outre, l'implantation obtenue est extrêmement variable d'un utilisateur à l'autre.

De plus, la définition d'une implantation d'une armoire industrielle est un processus long qui peut requérir des modifications importantes en fonction de contraintes nouvelles. Par exemple, un composant électrique peut être modifié au cours de l'implantation pour répondre à de nouvelles exigences de fonctionnement.

La modification d'un composant électrique dans une implantation prédéfinie est souvent une source de complexité importante lorsque les dimensions du châssis sélectionné sont choisies au plus juste, si bien que l'utilisateur fait souvent le choix d'un autre châssis plus grand pour anticiper les modifications possibles de composants, afin de réserver des espaces vides dans le châssis pour implanter de nouveaux composants électriques et/ou remplacer des composants électriques existants.

Ainsi, les processus connus d'implantation de composants électriques dans une armoire électrique industrielle, assistés ou non par ordinateur, comprennent un risque de surdimensionnement de l'armoire électrique industrielle par rapport aux besoins.

Le problème technique de l'invention est de déterminer efficacement une implantation de composants électriques prédéfinis pour former une armoire électrique industrielle en facilitant les possibilités de modifications des composants électriques et en limitant les dimensions de l'armoire électrique industrielle.

Un autre problème technique de l'invention consiste à créer une armoire électrique sur mesure à partir d'une implantation déterminée des composants électriques, grâce à un procédé automatisé, dynamique, rapide, paramétrable, permettant d'obtenir un nombre illimité de châssis et d'armoires électriques, sans aucune restriction imposée par une bibliothèque de châssis et/ou d'armoires prédéfinis conformément aux configurateurs de l'état de la technique.

### Présentation de l'invention

Pour répondre à ce problème technique, l'invention propose de fournir une première implantation automatisée en fonction de critères standards et de définir les dimensions du châssis après la définition de cette première implantation. Cette première implantation réalisée avec des critères standards étant souvent imparfaite, l'invention propose de permettre à l'utilisateur d'imposer une ou plusieurs contraintes afin de refaire l'implantation en fonction des contraintes imposées par l'utilisateur afin d'affiner, de manières itératives, l'implantation et de faciliter les modifications des composants électriques et/ou des dimensions du châssis.

A cet effet, l'invention concerne un procédé de réalisation d'une armoire électrique industrielle en fonction d'une liste de composants électriques, ledit procédé comportant dans l'ordre les étapes suivantes mises en œuvre par ordinateur :
- extraction d'une représentation et d'informations techniques associées à chaque composant électrique, lesdites informations techniques intégrant au moins une classification dudit composant électrique, un encombrement dudit composant électrique et une information de fixation décrivant des moyens de fixation dudit composant électrique ;
- calcul d'une surface d'occupation totale desdits composants électriques en fonction dudit encombrement de chaque composant électrique ;
- définition d'un premier châssis en fonction de ladite surface d'occupation totale ;
- regroupement desdits composants électriques en fonction de ladite classification et de ladite information de fixation de chaque composant électrique ;
- calcul d'une première implantation dans laquelle lesdits composants électriques regroupés sont juxtaposés et lesdits composants électriques restants sont itérativement disposés dans des espaces libres dudit premier châssis ;
- affichage de ladite première implantation avec des moyens de modification de l'implantation de chaque composant électrique et/ou des dimensions dudit premier châssis ; et
- pour chaque modification effectuée, calcul et affichage en mode dynamique d'une nouvelle implantation et/ou d'un nouveau châssis en fonction des contraintes appliquées par l'utilisateur ;
ledit procédé comportant en outre une étape de réalisation d'une armoire électrique industrielle en fonction de ladite implantation obtenue et/ou dudit nouveau châssis.

L'invention permet ainsi de reconstruire, virtuellement et de manière itérative, l'implantation de composants électriques dans une armoire électrique industrielle réalisée sur mesure et uniquement après avoir finalisé l'implantation desdits composants électriques. Bien qu'un premier châssis soit défini pour obtenir la première implantation, les contraintes appliquées par l'utilisateur dans le positionnement de certains composants électriques et/ou dans les dimensions du châssis permettent souvent d'obtenir une armoire électrique industrielle avec un encombrement réduit par rapport à l'encombrement de la première implantation.

La réduction de l'encombrement a un impact positif sur la réduction des matières premières et la baisse des coûts de fabrication à la fois du châssis et de l'armoire.

Ainsi, l'invention propose d'utiliser une méthode de détermination d'une implantation de composants électriques dans une armoire industrielle, laquelle est définie a posteriori, ce qui correspond à une stratégie de conception complètement inversée par rapport à l'état de la technique.

En effet, dans l'état de la technique, l'implantation commence toujours par la définition d'un châssis ou la sélection d'un châssis dans une bibliothèque de châssis prédéfinis, et toute la stratégie d'implantation est réalisée en prenant en compte les dimensions de ce châssis prédéfini.

L'invention vise à permettre une modification des dimensions du châssis au cours des modifications de l'implantation si bien que les dimensions du châssis ne constituent plus le point de départ de l'implantation et ce sont les contraintes imposées par les composants électriques et par leur positionnement qui constituent le point de départ de l'implantation.

Il s'ensuit que l'invention permet de déterminer plus efficacement une implantation optimale pour les composants électriques.

En outre, les possibilités de modifications au cours du processus de développement permettent également de faciliter le remplacement des composants électriques existants.

De préférence, ladite étape d'extraction est configurée pour obtenir une représentation en trois dimensions de chaque composant électrique de sorte que l'affichage des implantations soit réalisé en trois dimensions.

Bien que l'invention puisse être utilisée avec des représentations en deux dimensions, les représentations en trois dimensions permettent d'améliorer les possibilités d'extraction d'informations pour la réalisation.

Par exemple, en déplaçant un modèle trois dimensions, un technicien peut plus facilement détecter le positionnement des vis ou des clips pour des éléments qui sont disposés sous les composants électriques.

La représentation en trois dimensions induit cependant une contrainte majeure : la fluidité de l'interface de modification. En effet, la modification est préférentiellement appliquée par l'utilisateur par l'intermédiaire d'une interface homme-machine d'un périphérique informatique tel qu'un ordinateur, une tablette tactile ou un téléphone intelligent. L'interface homme-machine peut être générée directement par une application installée sur le périphérique de l'utilisateur ou hébergée sur un serveur distant.

Dans tous les cas, les calculs nécessaires pour appliquer les contraintes de l'utilisateur sont consommateurs de ressources matérielles et l'affichage d'éléments en trois dimensions est souvent trop long.

Pour réduire ces contraintes d'affichage, ladite étape d'extraction réalise préférentiellement une transformation de ladite représentation dans le format FBX. En effet, les composants électriques sont généralement disponibles dans le format STEP qui est un format standard de l'industrie.

Ce format STEP, défini par la norme ISO 10303, représente des éléments en trois dimensions en utilisant un modèle de courbes et de surfaces.

Cependant, l'utilisation de ce format STEP pour représenter un grand nombre de composants électroniques et d'éléments de support induit un temps de calcul trop important pour garantir la fluidité de l'interface et une réponse rapide et en temps réel. Ce mode de réalisation propose de transformer les représentations disponibles au format STEP en format FBX.

Les données de ce format peuvent être représentées sous forme binaire ou ASCII et décrivent une hiérarchie de blocs ou nœuds possédant des identifiants ainsi que des propriétés de différents types : entier, décimal, chaîne de caractères, tableau...

Ce format FBX est principalement utilisé dans le domaine des jeux vidéoludiques et la transformation du format STEP au format FBX entraine une perte d'informations dans la définition des représentations des composants électroniques et des éléments de support qui semble incompatible avec l'application visée.

Cependant, il a été constaté que cette perte d'informations est acceptable au regard du gain de performances obtenu par l'utilisation de ce format FBX, bien spécifique et utilisé de manière inédite pour représenter une implantation d'une armoire électrique industrielle.

En outre, pour héberger l'application en ligne et pouvoir y accéder depuis une interface internet avec une grande fluidité, sur tout type de périphérique informatique tel qu'un ordinateur, une tablette tactile ou un téléphone intelligent, il convient d'utiliser un autre format que les formats STEP ou FBX. Un mode de réalisation de l'invention propose d'utiliser le format AssetBundle. Ce format AssetBundle est propre à l'utilisation du moteur trois dimensions Unity et permet la sérialisation, la compression de type LZ4 ainsi que le streaming des objets archivés sous ce format. De préférence, cette conversion est automatisée et est effectuée sur un serveur dédié. Elle permet de servir des données optimisées à l'application de manière rapide, en temps réel, et allie un faible cout en mémoire contrairement à un chargement brut du format FBX.

Outre les formats dédiés, un mode de réalisation complémentaire de l'invention propose de limiter les informations techniques associées aux composants électriques pour améliorer la fluidité.

Selon ce mode de réalisation, lesdites informations techniques comprennent uniquement une référence dudit composant électrique, une classification dudit composant électrique, un encombrement dudit composant électrique et une information de fixation décrivant des moyens de fixation dudit composant électrique.

Selon un mode de réalisation, ladite étape de définition d'un premier châssis est réalisée en créant un châssis dont la profondeur est supérieure à la profondeur maximum des composants électriques.

Selon un mode de réalisation, ladite étape de définition d'un premier châssis en fonction de ladite surface d'occupation totale est réalisée en créant un châssis dont la surface est supérieure à la surface d'occupation totale multipliée par un coefficient compris entre 1.2 et 1.5, préférentiellement 1.3.

Selon un mode de réalisation, ladite étape de regroupement desdits composants électriques est réalisée selon quatre fonctions : la sécurisation, l'alimentation, la commande et l'interface d'un ou plusieurs périphériques.

Selon un mode de réalisation, ladite étape de calcul recherche, en premier lieu, à monter les composants électriques regroupés sur des profilés montés sur des étriers eux-mêmes montés sur des montants de support et, en second lieu, sur des rails montés sur des montants de support.

### Brève description des figures

D'autres caractéristiques et avantages de l'invention ressortiront clairement de la description qui en est faite ci-après, à titre indicatif et nullement limitatif, en référence aux dessins annexés, dans lesquels :
- La figure 1 est un ordinogramme des étapes de réalisation d'une armoire électrique industrielle selon un mode de réalisation de l'invention ;
- La figure 2 est un ordinogramme détaillant un exemple de calcul de l'implantation de la figure 1 ;
- La figure 3 illustre une vue en perspective d'une première implantation obtenue par les étapes de la figure 1 ;
- La figure 4 illustre une vue en perspective d'une seconde implantation obtenue par les étapes de la figure 1 ;
- La figure 5 illustre une vue en perspective d'une troisième implantation obtenue par les étapes de la figure 1 ; et
- La figure 6 illustre une vue en perspective d'une quatrième implantation obtenue par les étapes de la figure 1.

### Description détaillée de l'invention

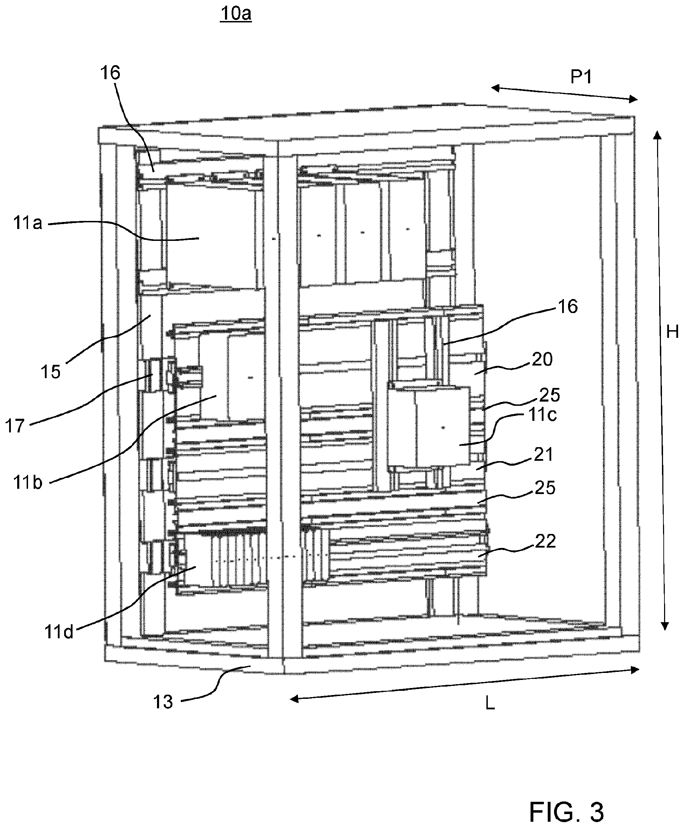

La description qui suit présente un mode de réalisation particulièrement simplifié de l'invention. En effet, les quatre implantations illustrées sur les figures 3 à 6 visent uniquement à décrire un fonctionnement possible du procédé de l'invention. Pour que les modifications puissent être explicitées, le nombre et le type de composants électriques a été limité. Bien entendu, dans une implantation réelle, le nombre et la diversité des composants électriques est souvent beaucoup plus important.

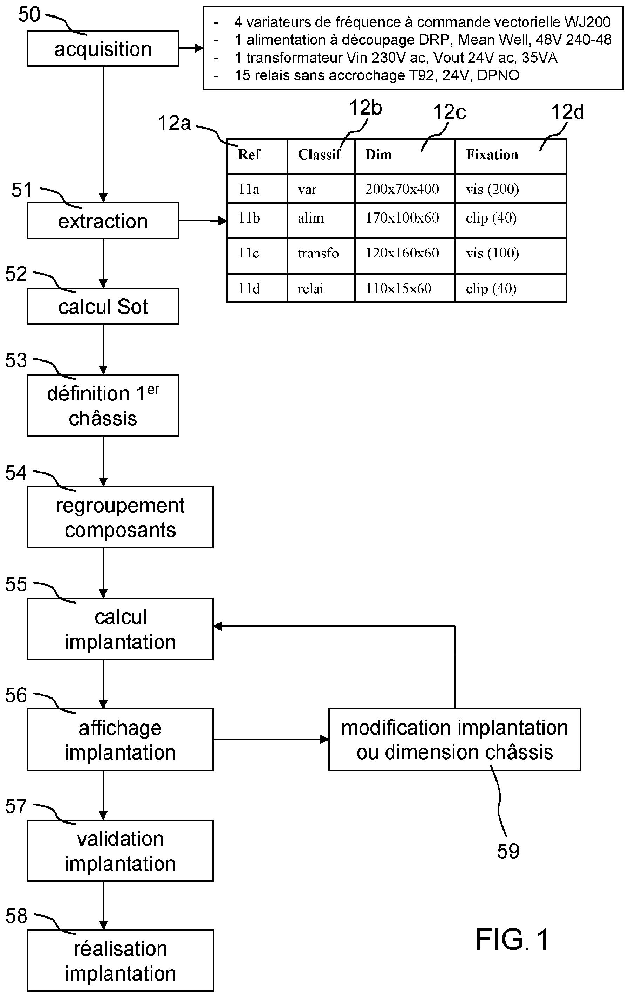

Dans l'exemple de la figure 1, une première étape **50** consiste à acquérir une liste de composants électriques sélectionnés pour être intégrés dans une armoire électrique industrielle. Généralement, cette liste de matériel est fournie par le destinataire final de l'armoire électrique industrielle.

Dans l'exemple de la figure 1, la liste est particulièrement simple puisqu'elle comporte quatre variateurs de fréquence à commande vectorielle ; une alimentation à découpage ; un transformateur 230/24 V ; et quinze relais sans accrochage 24 V. Ces éléments visent uniquement à illustrer un exemple de réalisation et, bien entendu, de nombreux autres composants électriques peuvent être implantés avec le procédé de l'invention.

Suite à cette première étape **50** d'acquisition de la liste de composants électriques destinés à être implantés dans une armoire électrique industrielle, le procédé comporte ensuite une seconde étape **51** visant à retrouver et à extraire une représentation et des informations techniques associées à chaque composant électrique sélectionné dans l'étape **50**.

Pour chaque composant électrique, cette étape **51** utilise préférentiellement une base de données locale ou distante pour retrouver une représentation en deux ou trois dimensions du composant électrique. En outre, les informations techniques associées à chaque composant électrique sont renseignées dans un tableau comportant au moins quatre colonnes : une première colonne **12a** indiquant la référence de chaque composant électrique, par exemple **11a** à **11d** ; une seconde colonne **12b** indiquant une classification de chaque composant électrique ; une troisième colonne **12c** présentant les dimensions de chaque composant électrique ; et une quatrième colonne **12d** contenant une information de fixation. Cette information de fixation vise à décrire les moyens de fixation de chaque composant électrique sur une structure de support. Par exemple, les composants électriques **11a-11d** peuvent être fixés par clipsage ou par vissage et l'entraxe entre les vis ou les clips peut varier d'un composant à l'autre.

Dans l'exemple de la figure 1, les quatre variateurs **11a** ainsi que le transformateur **11c** sont fixés par des vis. Les variateurs **11a** présentent un entraxe de 200 mm alors que le transformateur **11c** présente un entraxe de 100 mm. En outre, l'alimentation **11b** et les relais **11d** sont fixés par un système de clipsage sur un rail DIN en forme d'oméga avec un entraxe de 35 mm entre les deux pattes de l'oméga.

Suite à cette extraction de la représentation et des informations techniques **12a-12d**, une étape **52** calcule automatiquement la surface d'occupation totale **Sot** des composants électriques **11a-11d** en fonction de la somme de la surface en hauteur et en largeur des différents composants électriques **11a-11d**. En outre, cette étape **52** peut également rechercher une profondeur minimum en fonction de la profondeur du plus profond des composants électriques **11a-11d**.

Dans l'exemple de la figure 1, les plus profonds des composants électriques **11a-11d** sont les variateurs **11a**, présentant une profondeur de 400mm. Il peut donc être défini, dans une étape **53**, un premier châssis **13** avec une profondeur supérieure à 450 mm, en prenant en compte la profondeur minimum des éléments de support. Avec cette contrainte de profondeur, la hauteur **H** et la largeur **L** du premier châssis **13** sont déterminées en fonction de la surface d'occupation totale **Sot** des composants électriques **11a-11d** avec l'application d'un coefficient multiplicateur à cette surface d'occupation totale **Sot** pour limiter les contraintes d'implantation et prévoir les réserves nécessaires au câblage. Par exemple, le coefficient multiplicateur peut être compris entre 1.2 et 1.5. Ainsi, un premier châssis **13** dont l'encombrement est le plus réduit et qui répond aux exigences précédemment décrites est créé automatiquement, dans cette étape **53**, à partir d'éléments de structure comme des montants, des traverses, des plaques de fond, des façades, des goulottes de câblage, etc. dont les différents types sont prédéfinis dans une base de données locale ou distante. On entend par « création d'un châssis » une virtualisation ou une modélisation dudit châssis.

Tel qu'illustré sur la figure 3, ce premier châssis **13** comporte quatre montants reliant deux plaques supérieure et inférieure. Lors de la réalisation de l'armoire électrique industrielle, des plaques latérales sont également rapportées et une façade avant présente généralement une porte permettant d'intervenir sur les composants électriques implantés dans l'armoire électrique industrielle. Dans certains cas, l'armoire électrique industrielle peut également comporter une plaque de fond. Outre les montants formant la structure du premier châssis **13**, ce châssis **13** intègre également deux montants de support **15** s'étendant verticalement et juxtaposés avec les montants permettant de relier les plaques supérieure et inférieure. Les composants électriques **11a-11d** de l'armoire électrique industrielle sont montés sur ces montants de support **15**.

Pour déterminer la stratégie d'implantation des composants électriques **11a-11d**, le procédé de la figure 1 se poursuit, dans une étape **54**, par un regroupement automatique des composants électriques **11a-11d** présentant des fonctions et des moyens de fixation similaires. La similarité des moyens de fixation est assez simple à obtenir puisqu'il convient de regrouper les composants électriques **11a-11d** qui présentent les mêmes moyens de fixation décrits dans la colonne **12d** du tableau obtenu par l'étape d'extraction **51.** Ainsi, il est possible de regrouper le composant électrique **11b** et les composants électriques **11d** car ils sont tous destinés à être montés sur un rail DIN par clipsage avec un entraxe de 35 mm.

Cependant, ces composants **11b** et **11d** ne peuvent pas être regroupés car il est préférable de regrouper les composants électriques de même fonction de sorte à obtenir une armoire électrique industrielle dans laquelle plusieurs zones sont destinées à des fonctions distinctes.

Par exemple, il est possible de classer les composants électriques selon quatre fonctions principales : la puissance, la protection, la commande et le raccordement. La fonction de puissance est principalement assurée par le sectionneur principal recevant l'alimentation du réseau, les alimentations, les transformateurs et les variateurs. La fonction de protection intègre notamment les coupes circuits et les portes fusibles. La fonction de commande comprend les automates et les relais alors que la fonction de raccordement intègre les borniers et les interfaces.

Dans l'exemple de la figure 1, les composants électriques **11a-11c** peuvent être classés dans la fonction puissance et les composants électriques **11d** peuvent être classés dans la fonction commande. Les composants **11b** et **11d** sont donc dissociés.

Lorsque les composants électriques **11a-11d** sont regroupés, il est possible de calculer automatiquement une première implantation **10a,** dans une étape **55**. Il existe un grand nombre de règles possibles permettant de calculer cette première implantation **10a**.

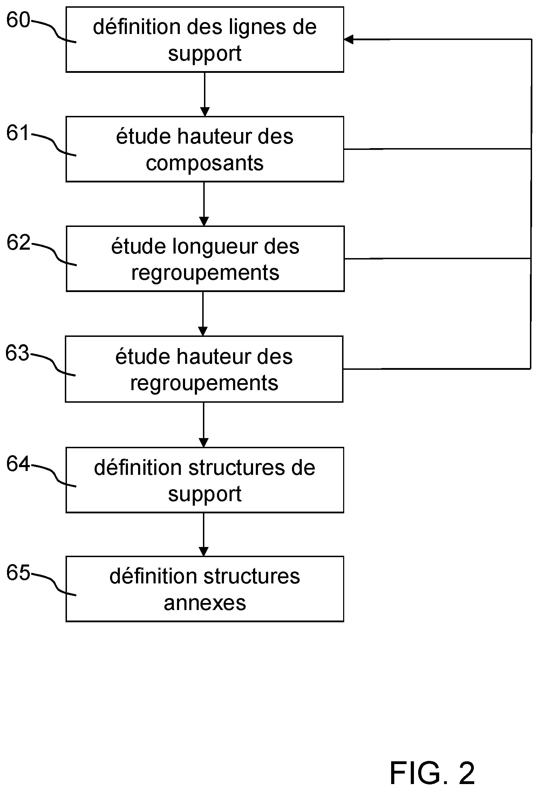

Par exemple, tel qu'illustré sur la figure 2, une première étape **60** consiste à définir les lignes permettant de supporter les différents regroupements effectués. Dans une première définition, chaque regroupement est superposé dans la hauteur **H** du châssis **13**. Le support de chaque regroupement est préférentiellement assuré par un ou deux profilés fixés par des étriers **17**, montés sur les montants **15**.

Une seconde étape **61** vise à vérifier que l'implantation envisagée respecte les contraintes en profondeur du châssis **13**. Dans l'exemple de la figure 1, les composants **11a** ne peuvent pas être montés sur des profilés fixés sur des étriers **17** car cette implantation dépasserait la profondeur de châssis **13**. Avec cette information, le procédé revient à l'étape **60** et les composants **11a** sont montés sur des rails **16** directement fixés sur les montants **15**, c'est-à-dire sans étrier **17.**

Cette stratégie d'implantation des composants **11a** permet de passer l'étape **61** et d'arriver à l'étape **62** dans laquelle les dimensions en longueur des regroupements sont vérifiées. Cette vérification vise à contrôler si les dimensions des composants d'un regroupement nécessitent plusieurs lignes superposées. Dans l'exemple de la figure 1, il n'est pas nécessaire de modifier l'implantation car la largeur **L** du châssis **13** est suffisante pour intégrer tous les regroupements sur une seule ligne.

La troisième vérification, réalisée dans une étape **63**, concerne le respect de la hauteur **H** du châssis 13 pour intégrer tous les regroupements. Dans cette étape **63**, il convient de mentionner que les dimensions des composants électriques **11a-11d** peuvent être exploitées directement selon les dimensions présentes dans la colonne **12c** du tableau de la figure 1.

En variante, il est possible de prendre en compte des considérations supplémentaires pour anticiper le câblage des composants électriques **11a-11d.** Typiquement, le composant électrique **11c** est un composant particulier qui requiert un espace supplémentaire en hauteur pour permettre le câblage.

Ainsi, dans cette étape **63**, la hauteur du composant **11c** correspond à la hauteur de 120 mm ajoutée à une hauteur permettant le câblage, par exemple une hauteur prédéterminée de 40 mm.

L'étude de la hauteur de l'implantation envisagée dans l'étape **63** indique que les regroupements dépassent la hauteur **H** du châssis **13**. Il est donc recherché, dans l'étape **60**, de décaler un regroupement dans la largeur **L** du châssis **13** pour le disposer sur la même ligne qu'un autre composant. Compte tenu de la largeur restant sur la ligne des composants **11a**, l'étape **60** converge vers une solution dans laquelle le composant **11c** est disposé sur la même ligne que le composant **11b**.

Lorsque les étapes **61** à **63** sont passées avec succès, l'implantation des composants est connue et il reste à définir les structures de support, dans une étape **64**.

Pour la première ligne, tel qu'illustré sur la figure 3, l'étape **64** sélectionne deux rails **16** montés parallèles sur les montants de support **15** avec une distance de 200 mm.

Pour la seconde ligne, l'étape **64** sélectionne un profilé **20** destiné à recevoir à la fois le composant **11b** et le composant **11c**. Le profilé **20** présente une hauteur de 155 mm adaptée à la hauteur du composant électrique **11b**. Compte tenu de la hauteur requise pour implanter le composant électrique **11c** en intégrant les contraintes de câblage, un second profilé **21** est disposé sous le profilé **20** et le composant **11c** est monté sur deux rails **16** visés sur les deux profilés **20** et **21**. En variante, il aurait été possible d'utiliser un seul profilé avec une hauteur plus importante pour recevoir les deux composants **11b** et **11c** mais l'utilisation de deux profilés **20-21** distincts permet de créer une ligne sous le composant **11b** sur laquelle des composants pourront ultérieurement être implantés. Ainsi, l'étape **64** recherche préférentiellement à utiliser des profilés dont la hauteur est inférieure à 200 mm.

Le profilé **21** présente une surface plane alors que le profilé **20** présente une partie droite avec une surface plane et une partie gauche pourvue d'un rail DIN central en oméga pour clipser le composant électrique **11b**. Pour finir, l'étape **64** sélectionne un profilé **22** présentant également un rail DIN en oméga mais une hauteur de 95 mm adaptée à la hauteur des composants électriques **11d.**

À l'issue de ces différentes recherches, le procédé de la figure 2 permet de déterminer automatiquement la position de chaque composant électrique **11a-11d,** les positions et les dimensions de chaque structure de support et le nombre d'étrier **17** nécessaires pour monter les profilés **20-22.**

En outre, dans une dernière étape **65,** les structures annexes sont définies, c'est-à-dire les structures qui peuvent être sélectionnées sans nécessiter une modification de l'implantation des composants électriques **11a-11d** et des structures de support. Dans l'exemple de la figure 3, les structures annexes peuvent correspondre aux caches **25** disposés entre les profilés **20-22.** Les différents types de structures de support et de structures annexes sont également prédéfinis dans une base de données.

Suite à cette étape de calcul **55** d'une première implémentation **10a**, le procédé illustré sur la figure 1 présente une étape **56** destinée à afficher cette première implantation **10a.** Il est possible de directement valider, dans une étape **57**, cette première implantation **10a** et de passer à une dernière étape **58** de réalisation de l'implantation pour effectivement monter l'armoire électrique industrielle ainsi conçue. Cette étape de réalisation implique éventuellement la commande des composants électriques **10a-10d**, la commande et la découpe des éléments de support et le montage de ces éléments pour former l'armoire électrique industrielle.

En variante, conformément à l'invention, le procédé de la figure 1 permet la modification de la position d'un ou plusieurs composants électriques **11a-11d** et/ou des dimensions du châssis **13**, dans une étape **59**, de sorte à ré-effectuer en temps réel et de manière dynamique, le calcul, dans l'étape **55**, en fonction de ces nouvelles contraintes. Ces nouvelles contraintes peuvent impliquer une nouvelle organisation des éléments de support, de nouvelles dimensions du châssis, etc. Cette étape **59** peut être exécutée une ou plusieurs fois en fonction du nombre de modifications demandées. Chaque modification fait l'objet d'un traitement automatique dans une boucle logicielle formée par les étapes **59**, **56** et **57** qui permettent d'afficher de manière dynamique et à chaque nouvelle modification, une nouvelle implantation et/ou un nouveau châssis. Ce fonctionnement dynamique permet à l'utilisateur de visualiser en temps réel la répercussion de chaque modification demandée. Au sens de l'invention, les termes « en mode dynamique » indiquent que l'ordinateur sur lequel est implémenté le procédé est configuré pour afficher rapidement ou en temps réel les modifications effectuées. Typiquement, les modifications peuvent être affichées en moins d'une seconde afin que l'utilisateur ne ressente pas de latence et puisse tester un grand nombre de scenarii de construction d'une armoire industrielle.

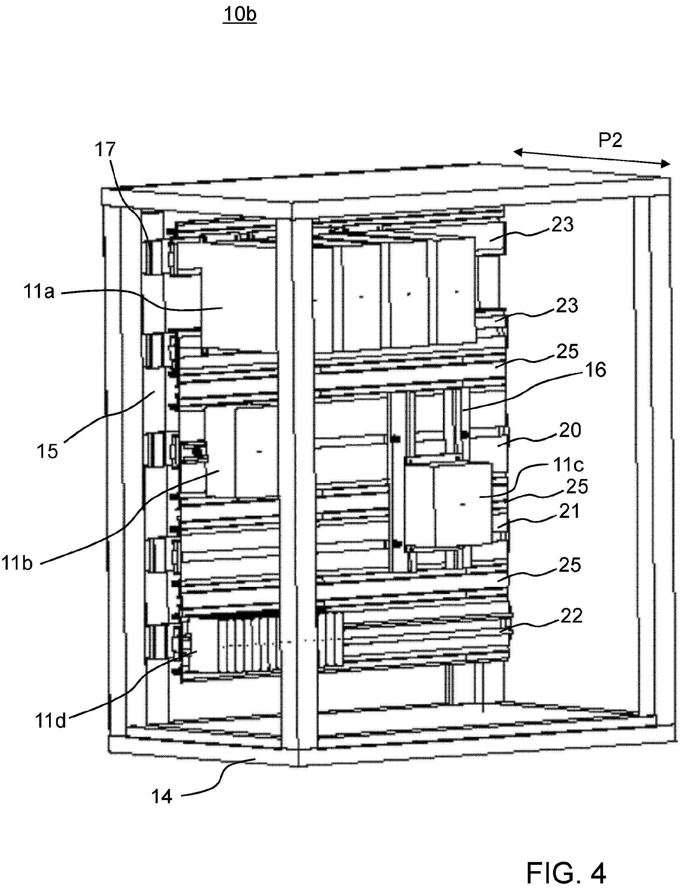

Les figures 4 à 6 illustrent des exemples de modifications effectuées par l'utilisateur.

Une première modification effectuée par l'utilisateur consiste à spécifier la profondeur du châssis **13** en appliquant une profondeur **P2** de 600 mm au lieu d'une profondeur **P1** de 500 mm ce qui permet d'obtenir un nouveau châssis **14**. Tel qu'illustré sur la figure 4, cette modification permet un montage des composants électriques **11a** sur des profilés **23**, eux-mêmes montés sur des étriers **17**.

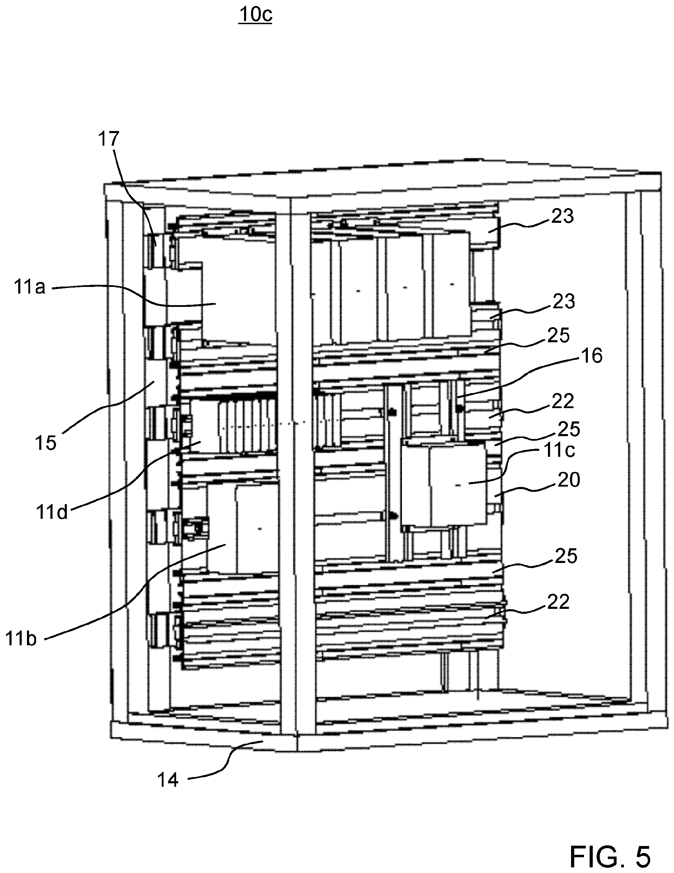

L'étape **61** de la figure 2 considère désormais que le composant **11a** peut être monté sur des étriers **17** et un profilé spécial **23** est monté pour accepter le vissage des composants électriques **11a** sur la première ligne de l'implantation **10b.** Une seconde modification est effectuée par l'utilisateur en fixant la position des composants électriques **11d** au-dessus du composant électrique **11b**.Tel qu'illustré sur la figure 5, avec cette contrainte d'implantation, le procédé de la figure 2 dispose les composants électriques **11d** sur une ligne dédiée entre les composants électriques **11a** et **11b.**

En outre, dans cette implantation **10c**, le composant électrique **11c** est monté sur les profilés **20** et **22** de montage des composants électriques **11d** et **11b** si bien que la ligne inférieure peut être supprimée et que la hauteur **H** du nouveau châssis **14** peut être réduite.

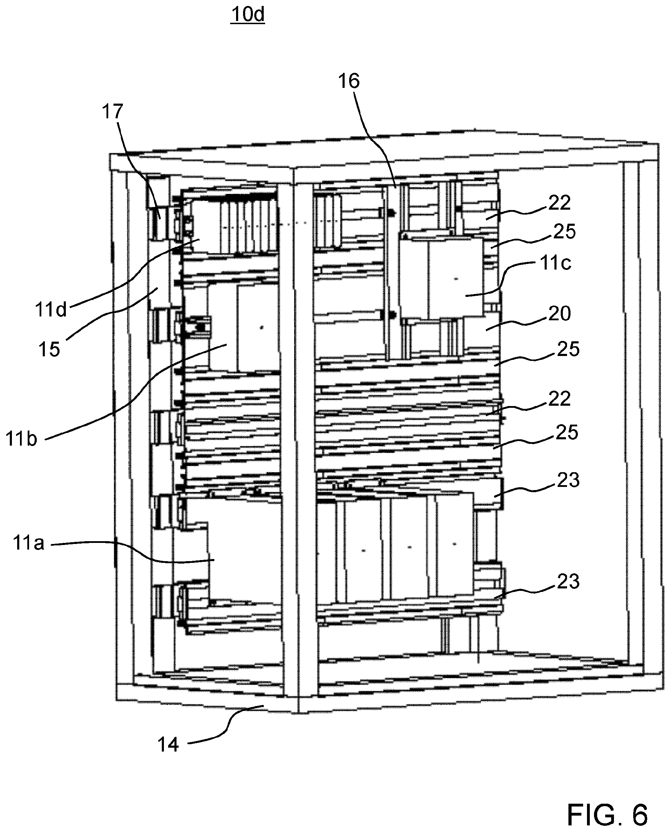

Une troisième modification consiste à disposer les composants électriques **11a** au niveau de la ligne inférieure. Tel qu'illustré sur la figure 6, cette troisième modification permet d'obtenir une implantation **10d** bien différente de la première implantation **10a** et adaptée aux besoins de l'utilisateur.

L'invention permet ainsi de modifier facilement et de manière dynamique les dimensions du châssis et l'implantation de composants électriques **10a-10d** dans la conception d'une armoire électrique industrielle. De préférence, ces possibilités de modifications sont accessibles depuis une interface d'un logiciel représentant l'implantation **10a-10d**. Cette interface peut être accessible sur un périphérique informatique tel qu'un ordinateur, une tablette tactile ou un téléphone intelligent. Cette interface peut être générée directement par une application installée sur le périphérique de l'utilisateur ou hébergée sur un serveur distant. Dans tous les cas, les calculs nécessaires pour appliquer les contraintes de l'utilisateur sont consommateurs de ressources matériels et l'affichage d'éléments en trois dimensions est souvent long.

Pour réduire ces contraintes d'affichage, l'étape d'extraction **51** réalise préférentiellement une transformation de la représentation dans le format FBX puis dans le format AssetBundle lorsque l'interface est générée par un serveur distant.

L'invention permet ainsi d'obtenir une interface fluide et accessible par internet sur un périphérique informatique tel qu'un ordinateur, une tablette tactile ou un téléphone intelligent, pour représenter les composants électriques **10a**-**10d** et leurs supports. Elle permet également d'obtenir une réponse rapide et dynamique lors de l'exécution des étapes du procédé, et d'afficher toute nouvelle implantation et/ou tout nouveau châssis en temps réel, sans temps de latence, d'où une ergonomie d'utilisation et un gain de temps appréciable.

## Revendications

1. Procédé de réalisation d'une armoire électrique industrielle en fonction d'une liste de composants électriques (11a-11d), ledit procédé comportant dans l'ordre les étapes suivantes mises en œuvre par ordinateur :
- extraction (51) d'une représentation et d'informations techniques (12a-12d) associées à chaque composant électrique (11a-11d), lesdites informations techniques (12a-12d) intégrant au moins une classification (12b) dudit composant électrique (11a-11d), un encombrement (12c) dudit composant électrique (11a-11d) et une information de fixation (12d) décrivant des moyens de fixation dudit composant électrique (11a-11d) ;
- calcul (52) d'une surface d'occupation totale (Sot) desdits composants électriques (11a-11d) en fonction dudit encombrement (12c) de chaque composant électrique (11a-11d) ;
- définition (53) d'un premier châssis (13) en fonction de ladite surface d'occupation totale (Sot) ;
- regroupement (54) desdits composants électriques (11a-11d) en fonction de ladite classification (12b) et de ladite information de fixation (12d) de chaque composant électrique (11a-11d) ;
- calcul (55) d'une première implantation (10a) dans laquelle lesdits composants électriques (11a-11d) regroupés sont juxtaposés et lesdits composants électriques restants sont itérativement disposés dans des espaces libres dudit premier châssis (13) ;
- affichage (56) de ladite première implantation (10a) avec des moyens (59) de modification de l'implantation de chaque composant électrique (11a-11d) et/ou des dimensions dudit premier châssis (13) ; et
- pour chaque modification effectuée, calcul (55) et affichage (56) en mode dynamique d'une nouvelle implantation (10b-10d) et/ou d'un nouveau châssis (14) en fonction des contraintes appliquées par l'utilisateur ;
ledit procédé comportant en outre une étape de réalisation (57) d'une armoire électrique industrielle en fonction de ladite implantation obtenue (10a-10d) et/ou dudit nouveau châssis (14).

2. Procédé de réalisation d'une armoire électrique industrielle selon la revendication 1, ***dans lequel*** ladite étape d'extraction (51) d'une représentation et d'informations techniques (12a-12d) associées à chaque composant électrique (11a-11d) réalise une transformation de la représentation en trois dimensions de chaque composant électrique (11a-11d) dans le format FBX de sorte que l'affichage (56) des implantations (10a-10d) soit réalisé en trois dimensions.

3. Procédé de réalisation d'une armoire électrique industrielle selon l'une des revendications 1 et 2, ***dans lequel*** ladite étape d'extraction (51) d'une représentation et d'informations techniques (12a-12d) associées à chaque composant électrique (11a-11d) réalise une transformation de la représentation en trois dimensions de chaque composant électrique (11a-11d) dans le format AssetBundle de sorte que l'affichage (56) des implantations (10a-10d) soit réalisé en trois dimensions.

4. Procédé de réalisation d'une armoire électrique industrielle selon l'une des revendications 1 à 3, ***dans lequel*** lesdites informations techniques (12a-12d) comprennent uniquement une référence (12a) dudit composant électrique (11a-11d), une classification (12b) dudit composant électrique (11a-11d), un encombrement (12c) dudit composant électrique (11a-11d) et une information de fixation (12d) décrivant des moyens de fixation dudit composant électrique (11a-11d).

5. Procédé de réalisation d'une armoire électrique industrielle selon l'une des revendications 1 à 4, ***dans lequel*** ladite étape de définition (53) d'un premier châssis (13) est réalisée en créant un châssis (13) dont la profondeur (P1, P2) est supérieure à la profondeur maximum des composants électriques (11a-11d).

6. Procédé de réalisation d'une armoire électrique industrielle selon l'une des revendications 1 à 5, ***dans lequel*** ladite étape de définition (53) d'un premier châssis (13) en fonction de ladite surface d'occupation totale (Sot) est réalisée en créant un châssis (13) dont la surface est supérieure à la surface d'occupation totale (Sot) multipliée par un coefficient compris entre 1.2 et 1.5, préférentiellement 1.3.

7. Procédé de réalisation d'une armoire électrique industrielle selon l'une des revendications 1 à 6, ***dans lequel*** ladite étape de regroupement (54) desdits composants électriques (11a-11d) est réalisée selon quatre fonctions : la sécurisation, l'alimentation, la commande et l'interface d'un ou plusieurs périphériques.

8. Procédé de réalisation d'une armoire électrique industrielle selon l'une des revendications 1 à 7, ***dans lequel*** ladite étape de calcul (55) recherche, en premier lieu, à monter les composants électriques (10a-10d) regroupés sur des profilés (20-23) montés sur des étriers (17) eux-mêmes montés sur des montants de support (15) et, en second lieu, sur des rails (16) montés sur des montants de support (15).

## Patentansprüche

1. Verfahren zur Herstellung eines industriellen Schaltschranks auf der Grundlage einer Liste von elektrischen Bauteilen (11a-11d), wobei das Verfahren in dieser Reihenfolge folgende computergesteuerte Schritte umfasst:
- Extraktion (51) einer Darstellung und technischer Informationen (12a-12d), die mit jedem elektrischen Bauteil (11a-11d) verbunden sind, wobei die technischen Angaben (12a-12d) mindestens eine Klassifizierung (12b) des elektrischen Bauteils (11a-11d), einen Platzbedarf (12c) des elektrischen Bauteils (11a-11d) und Befestigungsangaben (12d) umfassen, mit der die Mittel zur Befestigung des elektrischen Bauteils (11a-11d) beschrieben werden;
- Berechnung (52) einer Gesamtfläche (Sot) der elektrischen Bauteile (11a-11d) in Abhängigkeit vom Platzbedarf (12c) jedes elektrischen Bauteils (11a-11d);
- Definition (53) eines ersten Gehäuses (13) auf der Grundlage der Gesamtfläche (Sot);
- Gruppierung (54) der elektrischen Bauteile (11a-11d) auf der Grundlage der Klassifizierung (12b) und der Befestigungsangaben (12d) jedes elektrischen Bauteils (11a-11d);
- Berechnung (55) einer ersten Anordnung (10a), in der die in Gruppen eingeteilten elektrischen Bauteile (11a-11d) nebeneinander angeordnet sind und die übrigen elektrischen Bauteile iterativ in freien Räumen des ersten Gehäuses (13) angeordnet sind;
- Darstellung (56) der ersten Anordnung (10a) mit Mitteln (59) zur Änderung der Anordnung jedes elektrischen Bauteils (11a-11d) und/oder der Abmessungen des ersten Gehäuses (13); und
- für jede durchgeführte Änderung, Berechnung (55) und Darstellung (56) einer neuen Anordnung (10b-10d) und/oder eines neuen Gehäuses (14) im dynamischen Modus in Abhängigkeit von den vom Benutzer angewendeten Beschränkungen;
wobei das Verfahren außerdem einen Schritt der Herstellung (57) eines industriellen Schaltschranks in Abhängigkeit von der erhaltenen Anordnung (10a-10d) und/oder dem neuen Gehäuse (14) umfasst.

2. Verfahren zur Herstellung eines industriellen Schaltschranks nach Anspruch 1, ***wobei*** im Extraktionsschritt (51) der Darstellung und der technischen Angaben (12a-12d), die mit jedem elektrischen Bauteil (11a-11d) verbunden sind, eine Konvertierung der dreidimensionalen Darstellung jedes elektrischen Bauteils (11a-11d) in das PBX-Format durchgeführt wird, so dass die Darstellung (56) der Anordnungen (10a-10d) dreidimensional erfolgt.

3. Verfahren zur Herstellung eines industriellen Schaltschranks nach einem der Ansprüche 1 und 2, ***wobei*** im Extraktionsschritt (51) einer Darstellung und technischer Angaben (12a-12d), die mit jedem elektrischen Bauteil (11a-11d) verbunden sind, die dreidimensionale Darstellung jedes elektrischen Bauteils (11a-11d) in das AssetBundle-Format konvertiert wird, so dass die Darstellung (56) der Anordnungen (10a-10d) dreidimensional erfolgt.

4. Verfahren zur Herstellung eines industriellen Schaltschranks nach einem der Ansprüche 1 bis 3, ***wobei*** die technischen Angaben (12a-12d) nur eine Referenz (12a) des elektrischen Bauteils (11a-11d), eine Klassifizierung (12b) des elektrischen Bauteils (11a-11d), einen Platzbedarf (12c) des elektrischen Bauteils (11a-11d) und eine Befestigungsangabe (12d) umfassen, in der die Mittel zum Befestigen des elektrischen Bauteils (11a-11d) beschrieben werden.

5. Verfahren zur Herstellung eines industriellen Schaltschranks nach einem der Ansprüche 1 bis 4, ***wobei*** der Schritt der Festlegung (53) eines ersten Gehäuses (13) durchgeführt wird, indem ein Gehäuse (13) erstellt wird, dessen Tiefe (P1, P2) über der maximalen Tiefe der elektrischen Bauteile (11a-11d) liegt.

6. Verfahren zur Herstellung eines industriellen Schaltschranks nach einem der Ansprüche 1 bis 5, ***wobei*** der Schritt der Festlegung (53) eines ersten Gehäuses (13) in Abhängigkeit von der Gesamtfläche (Sot) durchgeführt wird, indem ein Gehäuse (13) erstellt wird, dessen Fläche größer ist als die Gesamtfläche (Sot) ist, die mit einem Koeffizienten zwischen 1,2 und 1,5, vorzugsweise 1,3, multipliziert wird.

7. Verfahren zur Herstellung eines industriellen Schaltschranks nach einem der Ansprüche 1 bis 6, ***wobei*** der Schritt der Gruppierung (54) der elektrischen Bauteile (11a-11d) nach vier Funktionen durchgeführt wird: Sicherung, Stromversorgung, Steuerung und und Schnittstelle einer oder mehrerer Peripheriegeräte.

8. Verfahren zur Herstellung eines industriellen Schaltschranks nach einem der Ansprüche 1 bis 7, ***wobei*** die elektrischen Bauteile (10a-10d) im Berechnungsschritt (55) nach Gruppen auf Profilen (20-23) montiert werden, die erstens an Trägerpfosten (15) auf Bügeln (17) und zweitens an Trägerpfosten (15) auf Schienen (16) befestigt sind.

## Claims

1. Method for producing an industrial electrical cabinet depending on a list of electrical components (11a-11d), said method comprising in order the following steps implemented by computer:
- extraction (51) of a representation and technical information (12a-12d) associated with each electrical component (11a-11d), said technical information (12a-12d) integrating at least one classification (12b) of said electrical component (11a-11d), a size (12c) of said electrical component (11a-11d) and fixing information (12d) describing means for fixing said electrical component (11a-11d);
- calculation (52) of a total occupancy area (Sot) of said electrical components (11a-11d) as a function of said size (12c) of each electrical component (11a-11d) ;
- definition (53) of a first frame (13) as a function of said total occupancy surface (Sot);
- grouping (54) of said electrical components (11a-11d) according to said classification (12b) and said fixing information (12d) of each electrical component (11a-11d);
- calculation (55) of a first installation (10a) wherein said grouped electrical components (11a-11d) are juxtaposed and said remaining electrical components are iteratively arranged in the free spaces of the first frame (13);
- displaying (56) the first installation (10a) with means (59) for modifying the installation of each electrical component (11a-11d) and/or the dimensions of the first frame (13); et
- for each modification carried out, calculating (55) and displaying (56) in dynamic mode, of a new installation (10b-10d) and/or a new frame (14) depending on the constraints applied by the user;
said method further comprising a step of production (57) of an industrial electrical cabinet depending on said resulting obtained installation (10a-10d) and/or said new frame (14).

2. Method for producing an industrial electrical cabinet according to claim 1, ***wherein*** said step of extracting (51) a representation and technical information (12a-12d) associated with each electrical component (11a-11d) performs a transformation of the three-dimensional representation of each electrical component (11a-11d) into the FBX format such that the displaying (56) of the installations (10a-10d) is done in three dimensions.

3. Method for producing an industrial electrical cabinet according to one of claims 1 and 2, ***wherein*** said step of extracting (51) a representation and technical information (12a-12d) associated with each electrical component (11a-11d) performs a transformation of the three-dimensional representation of each electrical component (11a-11d) into the AssetBundle format so that the displaying (56) of the installations (10a-10d) is done in three dimensions.

4. Method for producing an industrial electrical cabinet according to one of claims 1 to 3, ***wherein*** said technical information (12a-12d) comprises only a reference (12a) of said electrical component (11a-11d), a classification (12b) of said electrical component (11a-11d), a size (12c) of said electrical component (11a-11d) and fixing information (12d) describing fixing means of said electrical component (11a-11d).

5. Method for producing an industrial electrical cabinet according to one of claims 1 to 4, ***wherein*** said step of defining (53) a first frame (13) is carried out by creating a frame (13), the depth (P1, P2) of which is greater than the maximum depth of the electrical components (11a-11d).

6. Method for producing an industrial electrical cabinet according to one of claims 1 to 5, ***wherein*** said step of defining (53) a first frame (13) depending on total occupancy area (Sot) is carried out by creating a frame (13), the area of which is greater than the total occupancy area (Sot) multiplied by a coefficient of between 1.2 and 1.5, preferably 1.3.

7. Method for producing an industrial electrical cabinet according to one of claims 1 to 6, ***wherein*** said step of grouping (54) said electrical components (11a-11d) is carried out according to four functions: securing, powering, controlling and interfacing one or more devices.

8. Method for producing an industrial electrical cabinet according to one of claims 1 to 7, ***wherein*** said calculation step (55) seeks, firstly, to mount the electrical components (11a-11d) grouped together on profiles (20-23) mounted on stirrups (17) themselves mounted on support uprights (15) and, secondly, on rails (16) mounted on support uprights (15).
